# EUROPÄISCHE PATENTANMELDUNG

(11) **EP 1 829 467 A2**
(43) Veröffentlichungstag der Anmeldung: **05.09.2007**
(21) Anmeldenummer: 06020174.6
(22) Anmeldetag: 26.09.2006
(51) Int. Cl.: A47J 31/06

(54) **Brühvorrichtung mit Aufnahme für Kaffeepad**

(30) Priorität: 07.12.2005 DE 202005019133 U
(71) Anmelder: PAV PATENTVERWERTUNG KG, 83395 Freilassing (DE)
(72) Erfinder:
(74) Vertreter: Grünecker, Kinkeldey, Stockmair & Schwanhäusser Anwaltssozietät

(57) **Zusammenfassung**

Die vorliegende Erfindung betrifft eine Brühvorrichtung für eine Niederdruckkaffeemaschine, mit einer Brühkammer, einem unteren Brühkammerteil und einem oberen, relativ zum unteren, von einer geschlossenen Brühstellung in eine offene Entnahmestellung bewegbaren Brühkammerteil. Das untere Brühkammerteil weist dabei eine von einer Seitenwand begrenzte Aufnahme für ein Kaffeepad auf. Die Aufnahme umfasst eine Aufnahmemulde für den mit dem gemahlenen Kaffee gefüllten Bereich des Kaffeepads, eine die Aufnahmemulde ringförmig umgebende sich bis zur Seitenwand erstreckende Auflagestufe für die im Wesentlichen flache Auflage eines Siegelrandes des Kaffeepads und Ablaufnuten, die sich bis in den Bereich einer in der Aufnahmemulde zum Abführen des aufgebrühten Kaffeeextrakts vorgesehenen Auslauföffnung erstrecken. Die Aufnahmemulde umfasst dabei einen die Auslauföffnung umgebenden erhöhten Auflagebereich und eine gegenüber dem erhöhten Auflagebereich vertieft angeordnete, den erhöhten Auflagebereich umgebende Ringnut.

## Beschreibung

Die vorliegende Erfindung betrifft eine Brühvorrichtung für eine Niederdruckkaffeemaschine, mit einer Brühkammer, einem unteren Brühkammerteil und einem oberen, relativ zum unteren, von einer geschlossenen Brühstellung in eine offene Entnahmestellung bewegbaren Brühkammerteil, wobei das untere Brühkammerteil eine von einer Seitenwand begrenzte Aufnahme für ein mit gemahlenen Kaffee gefülltes Filterkissen (Kaffeepad) aufweist, wobei die Aufnahme eine Aufnahmemulde zum Aufnehmen eines mit dem gemahlenen Kaffee gefüllten Bereichs des Kaffeepads, eine die Aufnahmemulde ringförmig umgebende sich bis zur Seitenwand erstreckende Auflagestufe für die im Wesentlichen flache Auflage eines Siegelrandes des Kaffeepads und Ablaufnuten, die sich bis in den Bereich einer in der Aufnahmemulde zum Abführen des aufgebrühten Kaffeeextrakts vorgesehenen Auslauföffnung erstrecken, umfasst.

Eine solche Brühvorrichtung ist beispielsweise aus der DE 103 34 543 bekannt. In dieser Brühvorrichtung werden kreisförmige Kaffeepads verwendet, deren mittiger, mit gemahlenem Kaffee gefüllter Bereich von einem ca. 5 mm breiten Siegelrand aus Filterpapier umgeben ist. Diese Kaffeepads dienen zum portionsweisen Aufbrühen von Filterkaffee und werden hierzu in eine dafür vorgesehene Filterkassette eingelegt. Die Filterkassette weist auf ihrer Oberseite eine Aufnahmemulde zum Aufnehmen eines einzelnen Kaffeepads auf. Die Aufnahmemulde ist mit einer mittig angeordneten Auslauföffnung versehen, in der eine Düsenscheibe mit einer Düsenöffnung angeordnet ist. Die Aufnahmemulde ist dabei so ausgebildet, dass die Unterseite des Kaffeepads auf der Oberfläche der Aufnahmemulde aufliegt. Die Aufnahmemulde wird von einer Auflagestufe umgeben, auf der der Siegelrand des Kaffeepads flach zur Auflage kommt. Ein Teil der Auflagefläche der Aufnahmemulde wird durch entsprechende Auflagestege gebildet, die eine Drainage des Kaffeeextrakts aus dem Kaffeepad in den Zwischenraum zwischen den Auflagestegen ermöglichen. Die bei dieser Vorrichtung eingesetzte Filterkassette ist eine sogenannte Wendewechselkassette, die auch im umgedrehten Zustand eingesetzt werden kann. Dabei ist die Aufnahmemulde auf der anderen Seite tiefer ausgestaltet, so dass zwei Kaffeepads oder ein mit losem Kaffeepulver gefüllter Filterbehälter eingelegt werden können.

Eine gattungsgemäße Kaffeebrühvorrichtung für eine Niederdruckkaffeemaschine ist aus der EP 904 718 bekannt. Dabei ist der untere Teil der Brühkammer als einfacher Filterträger ausgebildet, in den ein Kaffeepad eingelegt wird, während der obere Teil der Brühkammer an einem Schwenkdeckel befestigt ist und relativ zum Filterträger bewegbar ist. Der Filterträger, der detailliert in der EP 904 717 beschrieben ist, weist eine Aufnahme für das Kaffeepad auf, das auf dem Boden der Aufnahme aufliegt und sich über diesen Boden bis zur Seitenwand der Aufnahme erstreckt. Die Aufnahme besteht dabei aus einem horizontal sich nach außen erstreckenden Ring zur Auflage des Siegelrandes und einem daran angrenzenden topfförmigen Abschnitt mit einer Auslauföffnung zur Aufnahme des mit gemahlenem Kaffee gefüllten Bereichs des Kaffeepads. Die Bodenform des topfförmigen Bereichs entspricht im Wesentlichen der Form der Unterseite des Kaffeepads, um ein Anliegen der Unterseite über die gesamte Oberfläche des topfförmigen Bereichs sicherzustellen. Weiter ist der Boden mit einer Anzahl von rillenförmigen Nuten versehen, die sich zum Abführen des aufgebrühten Kaffeeextrakts in einem Abstand von der Seitenwand beginnend in radialer Richtung zur Auslauföffnung erstrecken. Im Randbereich des topfförmigen Abschnitts liegt daher die an die Form der Aufnahme angepasste Unterseite des Kaffeepads flächig auf der Oberfläche der Aufnahme auf.

In der geschlossenen Brühstellung bildet in der EP 904 717 das obere Brühkammerteil gemeinsam mit dem Filterträger eine Brühkammer aus, wobei ein Dichtungsring auf dem Siegelrand aufliegt und das obere Brühkammerteil im Wesentlichen mit der oberen Seite des Kaffeepads abschließt. Aus einem zentralen Einlass gelangt Brühwasser auf die Oberseite des Kaffeepads, tritt durch das Kaffeepad hindurch und gelangt über die Nuten zur Auslassöffnung. Dabei wird der Kaffeeextrakt nur im Bereich der rillenförmigen Nuten aus dem Kaffeepad abgeleitet, während dort, wo das Kaffeepad auf der Oberfläche der Aufnahme aufliegt, d.h. in den Segmenten zwischen den Nuten und dem Randbereich ohne Nuten, der Kaffeeextrakt nicht abgeführt wird, sondern bis zu einer Nut weitergeleitet wird. Der auf dem Siegelrand aufliegende Dichtungsring verhindert einen Bypass des Brühwassers um den Außenrand des Pads, bzw. des Siegelrandes, herum und ermöglicht zu Beginn des Brühvorgangs eine Verteilung des Brühwassers über die Oberseite des Kaffeepads. Da das Kaffeepad jedoch über die gesamte Unterseite auf der Oberfläche der Aufnahme aufliegt und der obere Teil der Brühkammer verhältnismäßig dicht an die Oberseite des Kaffeepads heranreicht, wird nach dem ersten Aufquellen des Kaffees durch das Brühwasser der Randbereich des Kaffeepads sowohl von der Oberseite durch das aufquellende Kaffeemehl als auch von der Unterseite durch die fehlenden Nuten schlechter angebunden, so dass ein größerer Teil des Brühwassers durch den zentralen Bereich des Kaffeepads geführt wird.

Da bei der EP 904 717 die Ablaufnuten erst in einem Abstand zum Rand der topfförmigen Aufnahmemulde beginnen, ist der Außenbereich des mit gemahlenen Kaffee gefüllten Pads zwar schlecht an den Extraktionsvorgang angebunden, wird aber zur Abdichtung und Vermeidung eines Bypasses innerhalb der Brühkammer genutzt. Das Anliegen der an die Form der Aufnahme angepassten Unterseite des Kaffeepads im nutfreien Randbereich verhindert, dass das auf der Oberseite des Kaffeepads vorliegende Brühwasser durch den Siegelrand bzw. die Außenbereiche des mit Kaffeemehls gefüllten Abschnitts des Pads zur Unterseite hindurchtritt und von dort ohne eine signifikante Extraktion zur Auslassöffnung geführt wird. Zwar verhindert das Anliegen der Unterseite des Kaffeepads im nutfreien Bereich einen solchen inneren Kurzschluss, jedoch ist nach einem ersten Durchfeuchten des Kaffeemehls der Widerstand im Randbereich derart erhöht, dass der größte Teil des Brühwassers durch die zentralen Abschnitte des Kaffeepads hindurchtritt. Die Randbereiche des Kaffeepads, in denen sich ein nicht unerheblicher Teil des gemahlenen Kaffees befindet, tragen daher geringer zur Extraktion des Kaffees bei. Daraus wird deutlich, dass die an den topfförmigen Bereich der Aufnahme angepasste Form der Unterseite des Kaffeepads für die Funktion dieser gattungsgemäßen Kaffeebrühvorrichtung notwendig ist. Sowohl Kaffeepads, die mit ihrer Form nicht an die Oberfläche des topfförmigen Bereichs angepasst sind oder deren Durchmesser des mit gemahlenen Kaffee gefüllten Bereiches kleiner ist, verhindern ein Anliegen der Unterseite des Kaffeepads im nutfreien Bereich der Aufnahme, was zu einem inneren Bypass und dadurch wiederum zu einem schlechten Extraktionsergebnis führen kann.

Darüber hinaus kann es bei dem in der EP 904 717 beschriebenen Filterträger bei der Verwendung zu großer oder ungleichmäßig gefüllter Kaffeepads bzw. unsachgemäßer Handhabung zu einer übermäßigen oder ungleichmäßigen Pressung des im Filterkissen vorhandenen Kaffeepulvers führen, was wiederum zu einem schlechten Extraktionsergebnis, da das Brühwasser im Wesentlichen nur zentral bzw. durch das geringer gepresste Kaffeepulver strömt, oder gar zu einer Betriebsströmung durch eine Beschädigung des Pads führen kann.

Niederdruckkaffeemaschinen mit Brühvorrichtungen zum Zubereiten ,von Einzelportionen setzen sich auch für den Hausgebrauch immer stärker durch und haben sich in den unterschiedlichen auf dem Markt angebotenen Konstruktionen überwiegend gut bewährt. Neben den diesem sehr jungen und innovativen Marktsegment anhaftenden Anforderungen, die Benutzung solcher Kaffeemaschinen weiter zu vereinfachen, Anwendungsfehlern von Nutzern entgegen zu wirken sowie allgemein das Extraktionsergebnis zu verbessern, steht auch bei dieser Technik die Verbesserung bekannter Brühvorrichtungen und die Vermeidung bzw. Abschwächung bekannter Fehler im Vordergrund.

Es ist daher die Aufgabe der vorliegenden Erfindung, eine Kaffeebrühvorrichtung der eingangs genannten Art bereit zu stellen, die das Extraktionsergebnis des Brühvorgangs für ein mit gemahlenem Kaffee gefülltes Filterkissen verbessert und dabei auch den Randbereich des Kaffepads besser in den Extraktionsablauf einbindet sowie darüber hinaus möglichst die Benutzung der Brühvorrichtung vereinfacht.

Diese Aufgabe wird erfindungsgemäß dadurch gelöst, dass die Aufnahmemulde einen die Auslauföffnung umgebenden erhöhten Auflagebereich und eine gegenüber dem erhöhten Auflagebereich vertieft angeordnete, den erhöhten Auflagebereich umgebende Ringnut, umfasst.

Durch die gegenüber dem Auflagebereich vertieft angeordnete Ringnut liegt die Unterseite des aufliegenden Kaffeepads nur im Bereich des erhöhten Auflagebereichs und nicht über den gesamten Bereich der Aufnahmemulde an dessen Oberfläche an, d.h. zwischen der Oberfläche der Ringnut und der Unterseite des Kaffeepads bildet sich beim Einlegen des trockenen Kaffeepads im Bereich der Ringnut ein Ringhohlraum aus. Der Ringhohlraum zwischen der Oberfläche der Ringnut und der Unterseite des Kaffeepads, bei mehreren in der Aufnahme aufgenommenen Kaffeepads der Unterseite des ersten, auf dem Auflagebereich aufliegenden Kaffeepads, nimmt ein Teil des beim Übergang in die Brühstellung zusammengedrückten Kaffeepads auf, so dass insbesondere im Randbereich des Pads eine geringere Pressung vorliegt. Der Ringhohlraum bzw. die Ringnut ist dabei so dimensioniert, dass diese durch das zusammengedrückte Kaffeepad nicht vollständig ausgefüllt wird. So ist auch ein Verschließen möglicher Ablaufnuten durch das Kaffeepad nicht möglich. Die bei der Erfindung vorliegende Ringnut wirkt somit einem Anliegen des Kaffeepads im Randbereich der Aufnahmemulde entgegen, da der Ringhohlraum auch bei widrigen Umständen ausreichend Raum zur Aufnahme des zusammengedrückten Kaffeepads bietet. Dabei können mit einer solchen Aufnahme sehr unterschiedliche Kaffeepads genutzt werden. Sowohl Kaffeepads, die in ihrer Form der Unterseite als auch der Oberseite nicht an die Form der Aufnahme bzw. der Brühkammer angepasst sind, aber auch Kaffeepads mit kleineren oder größeren Durchmessern oder zu stark gefüllte Kaffeepads sind ohne eine Beeinträchtigung des Extraktionsvorgangs in der erfindungsgemäßen Brühvorrichtung einsetzbar.

Eine bevorzugte Ausführungsform sieht vor, dass die Ringnut abgerundete Seitenbereiche und eine im Wesentlichen ebene Grundfläche aufweist, wobei die Seitenbereiche von der Grundfläche zum erhöhten Auflagebereich und in Richtung der Auflagestufe ansteigen. Durch eine solche weiche Formgebung wird eine zusätzliche Belastung des Filterkissens durch die vertieft angeordnete Ringnut vermieden, so dass selbst bei einer unsachgemäßen Bedienung, schlecht gefüllten oder übergroßen Pads das Filterkissen nicht beschädigt werden kann. Dabei wird die Funktion der Ringnut nicht durch die abgerundeten Seitenbereiche beeinträchtigt.

Für eine zweckmäßige Ausbildung der Ringnut kann die Projektionsfläche der Ringnut 25% bis 45% der Projektionsfläche der Aufnahmemulde entsprechen. Durch dieses Flächenverhältnis wird die Ausbildung des Ringhohlraums sichergestellt und ein Einlegen der Unterseite des Kaffeepads in die Ringnut sicher verhindert. Bei einer im Wesentlichen runden Aufnahmemulde zur Aufnahme runder Kaffeepads kann die Aufnahmemulde beispielsweise einen Durchmesser von 61 mm aufweisen, während die Breite der Ringnut zwischen 7 und 8 mm liegt. Dabei ist diese Ringnut zwischen dem erhöhten Auflagebereich, Durchmesser beispielsweise 42 mm, und einem angefasten Randabschnitt von ca. 2 mm angeordnet. Bei im Wesentlichen runden Aufnahmen liegt das Verhältnis der Projektionsflächen von Ringnut zur Aufnahmemulde bevorzugt zwischen 35% und 45%, während bei rechteckförmigen Aufnahmen das Verhältnis bevorzugt zwischen 25% und 35% liegt. Entsprechend dem Verhältnis zur Aufnahmemulde kann die Projektionsfläche der Ringnut 20% bis 35% der Projektionsfläche des Auflagebereichs entsprechen.

Um eine ausreichende Tiefe des Ringhohlraums sicher zu stellen, kann der Auflagebereich der Aufnahmemulde gegenüber der Grundfläche der Ringnut um 1 bis 2 mm, bevorzugt um ca. 1,5 mm erhöht sein. Dabei ist es weiter von Vorteil, dass die Höhe eines zwischen der Ringnut und einem in der Entnahmestellung auf dem Auflagebereich aufliegenden Kaffeepad ausgebildeten Ringhohlraums zwischen 20% und 40% der Dicke des auf dem Auflagebereich aufliegenden Kaffeepads entspricht. Eine so ausgebildete Höhe der Ringnut bzw. des Ringhohlraums verhindert auch bei widrigen Randbedingungen sicher ein Anliegen des Kaffeepads in der Ringnut und stellt so auch während des Brühvorgangs eine gute Extraktion durch die Nutzung des gesamten Kaffeepads sicher.

Eine zweckmäßige Ausführungsform sieht vor, dass Ablaufnuten vorgesehen sind, die sich durchgehend von der Seitenwand bis in den Bereich der Auslauföffnung erstrecken, wobei die Ablaufnuten die Ringnut durchdringen. Die Ablaufnuten erstrecken sich durchgehend von der die Auflagestufe begrenzenden Seitenwand über die Auflagestufe, durch die Ringnut und den erhöhten Auflagebereich der Aufnahmemulde bis zur Auslauföffnung, um einen sicheren Ablauf der Brühflüssigkeit aus dem gesamten Bereich der Aufnahme, d.h. auch aus dem Bereich der sich im Wesentlichen horizontal erstreckenden Auflagestufe sowie den Außenbereichen der Aufnahmemulde, sicherzustellen. Dabei durchdringen die Ablaufnuten auch die vertieft angeordnete Ringnut, so dass die Ablaufnuten auch über den gesamten Boden der Ringnut als Nut vorhanden und in ihrer Funktion, den Ablauf des Kaffeeextrakts aus den angeschlossenen Bereichen zu ermöglichen, uneingeschränkt sind. Unter normalen Bedingungen reicht daher bereits eine geringe Nuttiefe aus, d.h. Ablaufnuten mit einem großen Breiten-Tiefen-Verhältnis, d.h. relativ breite und flache Nuten, um den Ablauf des Kaffeeextrakts durch die Ablaufnuten sicherzustellen und das gesamte Kaffeepad in den Extraktionsablauf einzubinden. Selbst bei einer unsachgemäßen Bedienung der Brühvorrichtung, z.B. einem ungleichmäßigen Einlegen des Kaffeepads, einer Verschiebung der Kaffeefüllung zu einer Seite oder bei übermäßig befüllten bzw. übergroßen Kaffeepads, kann es bei der hier vorliegenden Padaufnahme nicht zu einem Verschließen der Ablaufnuten mit kleinem Breiten-Tiefen-Verhältnis kommen.

Um die gesamte Ringfläche der Auflagestufe sowie der Ringnut ausreichend an den Ablauf des Kaffeeextrakts anzubinden, sind bevorzugt vier Ablaufnuten vorgesehen, die möglichst gleichmäßig über die Aufnahme verteilt sind, beispielsweise bei vier Ablaufnuten jeweils in einem Winkel von 90° zueinander stehen. Anstatt der bevorzugt vier Ablaufnuten können auch in Abhängigkeit von dem gewünschten Extraktionsergebnis mehr oder weniger Ablaufnuten vorgesehen sein. Weiter sieht eine besondere Variante vor, dass die Ablaufnuten eine Breite von ca. 1 mm aufweisen. Bei einer Breite der Ablaufnuten von ca. 1 mm ist durch den geringen Abstand der Flächen, die eine Auflage des Kaffeepads zulassen, ein Verschließen der Ablaufnuten durch das Kaffeepad auch unter widrigsten Umständen nicht möglich. Die hier genannten Merkmale der Ablaufnuten können auch unabhängig voneinander realisiert werden, um die gewünschten Effekte zu ermöglichen.

Für einen ungestörten Ablauf des Kaffeeextrakts können die Ablaufnuten zumindest im Bereich der Auflagestufe und im Auflagebereich eine gleiche Tiefe, bevorzugt ca. 1 mm, aufweisen. Die gleiche Tiefe der Ablaufnuten ermöglicht ein gleichmäßiges Ablaufen des Kaffeeextrakts über die gesamte Aufnahme, wobei bei einer bevorzugten Tiefe von ca. 1 mm immer ein ausreichender Ablaufquerschnitt sichergestellt wird, der auch bei unsachgemäßer Bedienung oder ungünstigen Verteilungen des gemahlenen Kaffees im Filterkissen sich nicht wesentlich verengt oder verschließt.

Eine vorteilhafte Ausführung sieht vor, dass der Auflagebereich eine Vielzahl von Drainagenuten zum Ausleiten des aufgebrühten Kaffeeextrakts aus dem Kaffeepad aufweist. Durch die Drainagenuten wird auch im Bereich der erhöhten Auflage des Kaffeepads ein gutes Ausleiten des Kaffeeextrakts aus dem Kaffeepad ermöglicht. Die Oberfläche des Auflagebereichs wird durch die Drainagenuten unterbrochen, so dass sich zwischen den Drainagenuten Segmente ausbilden, deren Oberfläche mit der Unterseite des Kaffeepads in Berührung stehen. Des Weiteren sind die Drainagenuten umlaufend um die Auslauföffnung und/oder radial in Richtung auf die Auslauföffnung angeordnet. Durch diese Anordnung der Drainagenuten wird ein möglichst gleichmäßiges Ausleiten des Kaffeeextrakts aus dem auf dem erhöhten Auflagebereich aufliegenden Abschnitts des Kaffeepads ermöglicht. Um auch ein möglichst schnelles und ungestörtes Abführen des aufgebrühten Kaffeeextrakts aus den Drainagenuten sicher zustellen können, die Drainagenuten zum Abführen des Kaffeeextrakts mit den Ablaufnuten oder direkt mit der Austrittsöffnung in Verbindung stehen. Dabei sind die tatsächlich direkt mit der Auslauföffnung in Verbindung stehenden Drainagenuten deutlich in der Unterzahl und im Wesentlichen nur in dem der Auslauföffnung angrenzenden Bereich der erhöhten Auflage zu finden.

Dabei ist es besonders vorteilhaft, wenn der Durchmesser der Auslauföffnung zwischen 5% und 15%, bevorzugt zwischen 7% und 13% des Durchmessers der Aufnahmemulde entspricht. Diese Dimensionierung ermöglicht ein direktes Abfließen des Kaffeeextrakts zur Auslauföffnung und verhindert ein Aufstauen des Kaffees bzw. das Entstehen eines Reservoirs, wodurch ein ungewolltes Nachfließen des Kaffeeextrakts nach Beendigung des Brühvorgangs, aber auch eine unvollständige Entleerung der aufgebrühten Kaffeemenge aus der Brühkammer verhindert wird.

Eine bevorzugte Ausgestaltung sieht vor, dass die Auslauföffnung eine Düsenscheibe mit einer Düsenöffnung aufweist. Eine solche als Lochblende ausgebildete Auslauföffnung ermöglicht durch die Düse ein Mitreißen von Luftpartikeln beim Austritt des Kaffees aus der Auslauföffnung. Trifft dieser Strahl aus einem Kaffeeextrakt-Luft-Gemisch auf eine geeignete Aufschäumeinrichtung, z.B. ein Reservoir, eine Prallplatte, ein Sieb oder eine Schäumkammer, dann bildet sich auf dem Kaffee eine Crema aus. Die Düsenscheibe ist gegenüber dem Auflagebereich vertieft in der Auslauföffnung angeordnet und bevorzugt als Teil des unteren Brühkammerteils ausgebildet. Die Düsenöffnung der Düsenscheibe ist im Wesentlichen in der Mitte der Auslauföffnung angeordnet. Vorteilhafterweise kann das Verhältnis zwischen dem Durchmesser der Düsenöffnung und dem Durchmesser der Auslauföffnung zwischen 0,1 und 0,2 betragen. Dieses Verhältnis ermöglicht eine optimale Abstimmung der Düsenöffnung zur Auslauföffnung unter Berücksichtung der weiteren Randbedingungen der Kaffeebrühvorrichtung, um ein gutes Ablaufverhalten und Cremaproduktion zu erreichen. Günstigerweise beträgt der Durchmesser der Düsenöffnung zwischen 0,6 und 1,0 mm, bevorzugt ca. 0,8 mm. Die geeignete Ausgestaltung der Düsenöffnung ermöglicht den notwendigen Druckaufbau in der Druckkammer auch bei dem Einsatz in einer Niederdruckkaffeemaschine.

In einer zweckmäßigen Ausgestaltung kann das untere Brühkammerteil als herausziehbare und hineinschiebbare Kassette ausgebildet sein. Die Kassette ermöglicht eine einfache Entnahme eines verbrauchten Kaffeepads bzw. die Befüllung des unteren Brühkammerteils mit einem neuen Kaffeepad. Dabei kann das obere Brühkammerteil einen in die Aufnahme eingreifenden Fortsatz aufweisen, damit die Kassette in der geschlossenen Brühstellung durch das obere Brühkammerteil zumindest formschlüssig im Eingriff steht.

Eine andere zweckmäßige Ausführungsform sieht vor, dass die herausziehbare und hineinschiebbare Kassette als Wendewechselkassette ausgebildet ist und auf der der Aufnahmemulde abgewandten Seite der Auslauföffnung eine weitere, im Wesentlichen gleichartig ausgebildete Aufnahme für ein oder mehrere Kaffeepads und/oder Filterbehälter ausgebildet ist, wobei sich die Auslauföffnung durch beide Aufnahmen erstreckt. Eine derartige Wendewechselkassette weist eine erste Aufnahme an einer Oberseite und eine zweite Aufnahme, die beispielsweise mit zwei Kaffeepads befüllt werden kann oder zur Aufnahme eines Filterbehälters ausgebildet ist, an der Unterseite des Halters auf, wobei die Wendewechselkassette durch einfaches Wenden von der einen Stellung in die andere überführt werden kann. Die Wendewechselkassette erhöht die Flexibilität einer erfindungsgemäßen Brühvorrichtung gegenüber herkömmlichen Geräten, da nicht nur eine einzige Tassenportion Kaffee, sondem auch mehrere Tassenportionen mit ein und demselben Halter erzeugt werden können, bzw. ein Halter sowohl für die Aufnahme von Kaffeepads als auch für Filterbehälter, die mit losem Kaffeepulver befüllt werden können, ausgebildet sein kann.

Des Weiteren bezieht sich die vorliegende Erfindung auf eine Brühvorrichtung für eine Niederdruckkaffeemaschine, mit einer Brühkammer, einem unteren Brühkammerteil und einem oberen, relativ zum unteren, von einer geschlossenen Brühstellung in eine offene Entnahmestellung bewegbaren Brühkammerteil, wobei das untere Brühkammerteil eine von einer Seitenwand begrenzte Aufnahme und ein darin angeordnetes, mit gemahlenen Kaffee gefülltes Filterkissen (Kaffeepad) aufweist, wobei die Aufnahme eine Aufnahmemulde, in der der mit gemahlenen Kaffee gefüllte Bereich des Kaffeepads aufgenommen ist, und eine die Aufnahmemulde ringförmig umgebende, sich bis zur Seitenwand erstreckende Auflagestufe, auf der der Siegelrand des Kaffeepads im Wesentlichen flach aufliegt umfasst, wobei in der Aufnahmemulde zum Abführen des aufgebrühten Kaffeeextrakts eine Auslauföffnung vorgesehen ist. Dabei umfasst die Aufnahmemulde einen die Auslauföffnung umgebenden erhöhten Auflagebereich und eine gegenüber dem erhöhten Auflagebereich vertieft angeordnete, den erhöhten Auflagebereich umgebende Ringnut. Die diesbezüglichen Vorteile einer solchen Brühvorrichtung für eine Niederdruckkaffeemaschine wurden oben bereits erläutert.

Darüber hinaus bezieht sich die Erfindung auf einen Halter für eine Brühvorrichtung nach einem der Ansprüche 1 bis 18. Dieser Halter zeichnet sich dadurch aus, dass die Aufnahmemulde einen die Auslauföffnung umgebenden Auflagebereich und eine gegenüber dem erhöhten Auflagebereich vertieft angeordnet, den erhöhten Auflagebereich umgebende Ringnut umfasst. Ein derartiger Halter ist insbesondere für die Nutzung von Niederdruckkaffeemaschinen im Hausgebrauch sinnvoll, da sich hierdurch die Gefahr eines schlechten Extraktionsergebnisses durch eine nicht ausreichende Durchströmung des Kaffeepads auch bei unsachgemäßer Behandlung durch den Nutzer, schlecht gefüllten oder nicht an die Form der Aufnahme angepasste Kaffeepads verringert.

Im Folgenden werden Ausführungsformen der vorliegenden Erfindung anhand einer Zeichnung näher erläutert. Es zeigen:
- Fig. 1: eine perspektivische Ansicht einer Kassette mit einer Aufnahme für ein Kaffeepad nach einer ersten Ausführungsform der Erfindung,
- Fig. 2a: eine Schnittansicht der Kassette aus Fig. 1,
- Fig. 2b: eine Draufsicht auf die Kassette aus Fig. 1,
- Fig. 3: eine perspektivische Ansicht einer Kassette mit einer Aufnahme für ein Kaffeepad nach einer zweiten Ausführungsform der vorliegenden Erfindung,
- Fig. 4a: eine Schnittansicht der Kassette aus Fig. 3,
- Fig. 4b: eine Draufsicht auf die Kassette aus Fig. 3,
- Fig. 5: zeigt eine Schnittansicht durch die Kassette aus Fig. 1 mit einem eingelegten Kaffeepad.

Die im Folgenden beschriebenen Ausführungsformen eines Padhalters 1 sind anstelle der in verschiedenen bekannten Brühvorrichtungen gezeigten Wendewechselkassetten einzusetzen, insbesondere der Brühvorrichtungen, die in den Druckschriften DE 103 32 051, DE 103 34 542, DE 103 34 544, DE 103 34 543, DE 103 34 526, DE 103 34 538 und DE 103 34 545 beschrieben sind. Da in diesen Druckschriften der obere Brühkammerteil und die den Padhalter 1 umgebenden Bauelemente bereits detailliert beschrieben sind, wird hier auf eine solche Beschreibung verzichtet und auf die genannten Druckschriften verwiesen.

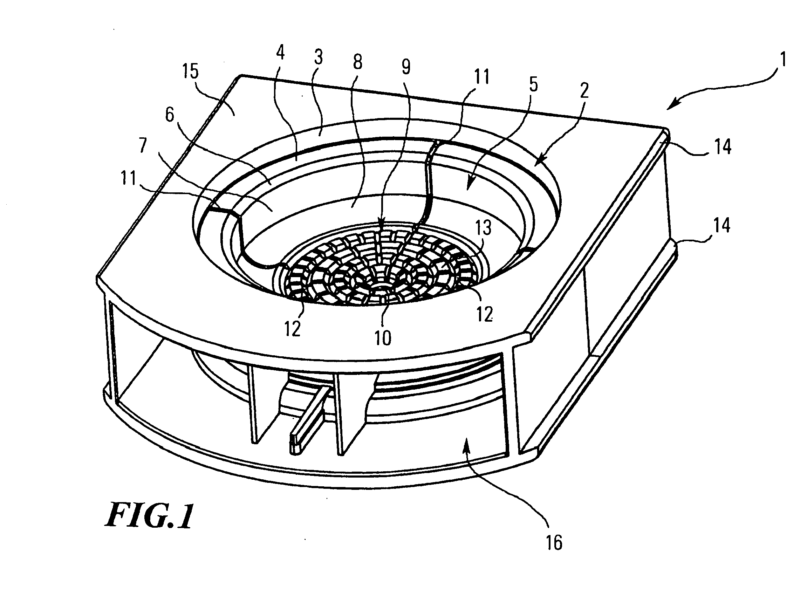

In der perspektivischen Ansicht des Padhalters 1 in Fig. 1 ist deutlich die Padaufnahme 2 für ein mit gemahlenem Kaffee gefülltes Filterkissen zu erkennen. Die in dieser Ausführungsform runde Padaufnahme 2 erstreckt sich zwischen der in den Padhalter 1 eingelassenen Seitenwand 3. Angrenzend an die senkrecht eingelassene ringförmig umlaufende Seitenwand 3 schließt sich eine horizontal verlaufende Auflagestufe 4 an. Anschließend an die Auflagestufe 4 beginnt der Bereich der Aufnahmemulde 5 zum Aufnehmen des mit gemahlenem Kaffee gefüllten Bereichs des Kaffeepads. Die Aufnahmemulde 5 beginnt zunächst mit einem Fasenabschnitt 6, der den Übergang zwischen horizontaler Auflagestufe 4 und senkrechter Innenwand 7 der Aufnahmemulde 5 bildet. Die ringförmige Innenwand 7 erstreckt sich bis in einen Bodenbereich der Aufnahmemulde 5 und geht dort in die Ringnut 8 über. Anschließend an die Ringnut 8 ist ein Auflagebereich 9 vorgesehen, der sich bis zur Austrittsöffnung 10 erstreckt, die mittig in der Aufnahmemulde 5 angeordnet ist. Die Aufnahme 2 ist von Ablaufnuten 11 durchzogen, die sich durchgehend von der Seitenwand 3 bis zur Auslauföffnung 10 erstrecken. Die Ablaufnuten 11 sind dabei jeweils gegenüber den sie umgebenden Oberflächen der Padaufnahme 2 vertieft ausgebildet. Der Auflagebereich 9 ist weiter auch von einer Reihe Drainagenuten 12 durchzogen, die sich sowohl radial in Richtung der Auslauföffnung 10 erstrecken, als auch ringförmig um die Auslauföffnung 10 verlaufen, wobei die ringförmig angeordneten Drainagenuten 12 die radial ausgerichteten Drainagenuten 12 mit dem Ablaufnuten 11 verbinden. Zwischen den Drainagenuten 12 bilden sich Auflagesegmente 13 aus, deren Oberfläche die Unterseite eines eingelegten Pads berühren und tragen. Seitlich am Padhalter 1 sind zwei Führungsstege 14 vorgesehen, die in Verlängerung der Oberfläche 15 des Padhalters 1 seitlich vorstehen und in entsprechende Führungen in der Brühvorrichtung einsetzbar sind, um eine sichere Positionierung des Padhalters 1 zu ermöglichen. Des Weiteren ist frontseitig der unabgedeckte Frontabschnitt 16 des Padhalters 1 zu sehen, der im Endmontagezustand des Padhalters 1 mit einem Handgriff versehen ist, um den Nutzer eine sichere Handhabung des Padhalters zu ermöglichen.

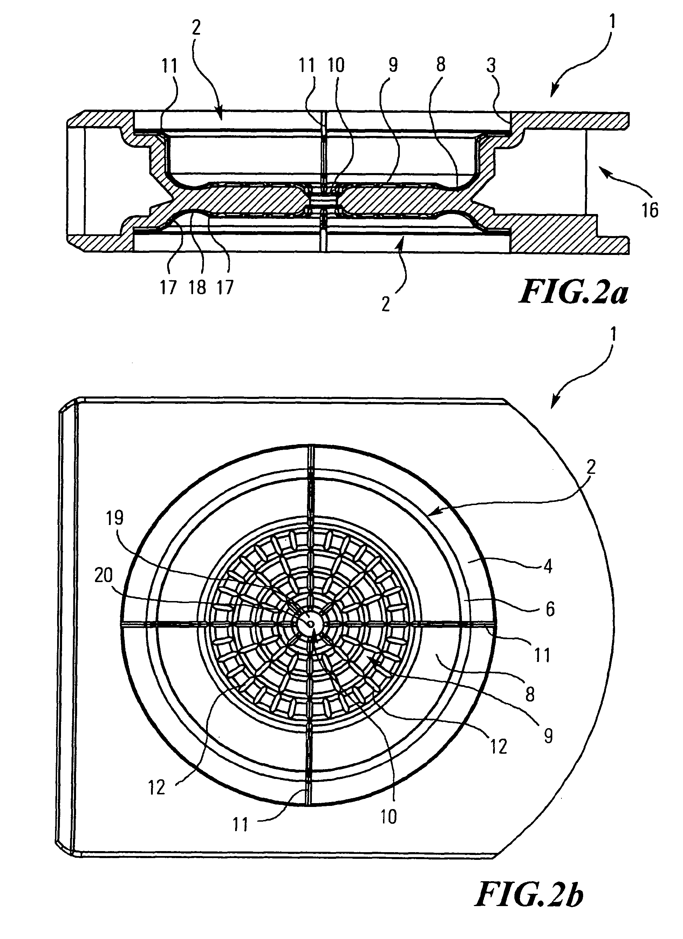

Fig. 2a zeigt einen Schnitt durch den Padhalter 1 und lässt deutlich die Funktion des Padhalters 1 als Wendewechselkassette erkennen. Sowohl auf der Oberseite als auch auf der Unterseite des Padhalters 1 ist jeweils eine Padaufnahme 2 erkennbar, wobei auf der Oberseite die Tiefe der Padaufnahme größer ist, um dort beispielsweise zwei Kaffeepads aufzunehmen. In dieser Schnittansicht ist deutlich zu erkennen, dass die Ringnut 8 gegenüber dem Auflagebereich 9 vertieft angeordnet ist. Die Form der Ringnut 8 bildet sich aus zwei abgerundeten Seitenbereichen 17, die einen weichen Übergang zu den angrenzenden Abschnitten der Innenwand 7 und des Auflagebereichs 9 ermöglichen sowie einen im Wesentlichen ebenen Grundflächenabschnitt 18 aus. Ebenfalls erkennbar ist, dass sich die Ablaufnuten 11 von der Seitenwand 3 der Padaufnahme 2 durchgängig über die Auflagestufe 4, den Fasenabschnitt 6, die Innenwand 7, die Ringnut 8 und den Auflagebereich 9 zur Auslauföffnung 10 erstrecken. Auch die Auslauföffnung 10 ist gegenüber dem erhöhten Auflagebereich 9 vertieft angeordnet.

In der Draufsicht auf den Padhalter 1 in Fig. 2b ist wiederum gut zu erkennen, dass sich die Ablaufnuten 11 über den gesamten Bereich der Padaufnahme 2 erstrecken. Insbesondere zeigt diese Ansicht, dass vier Ablaufnuten 11 vorgesehen sind, die in einem Winkel von 90° zueinander angeordnet sind. Darüber hinaus sind deutlich die Drainagenuten 12 im Auflagebereich 9 zu erkennen, die sich sowohl radial in Richtung zur Auslauföffnung 10 als auch ringförmig um die Auslauföffnung 10 erstrecken. Weiter ist zu erkennen, dass nur die im innersten Ring des Auflagebereichs 9 vorgesehenen Drainagenuten 12; bzw. die radial anschließenden Drainagenuten direkt mit der Auslauföffnung 10 in Verbindung stehen. In der Auslauföffnung 10 ist eine Düsenscheibe 19 mit einer Düsenöffnung 20 angeordnet.

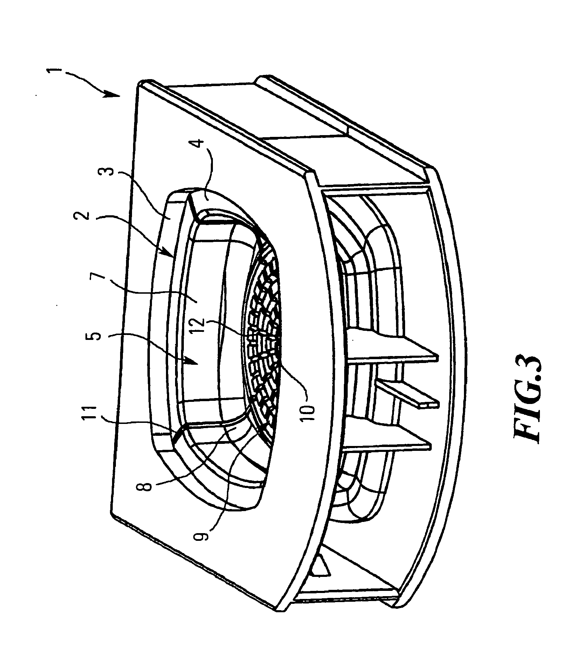

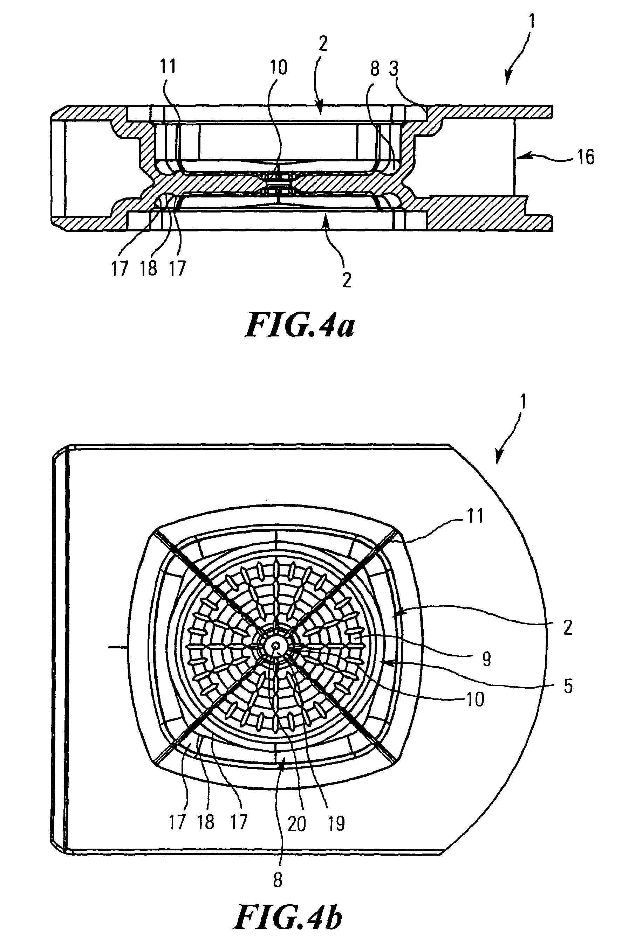

Eine weitere erfindungsgemäße Ausführungsform eines Padhalters 1 ist in Fig. 3 gezeigt. Bei diesen Padhalter 1 ist die Padaufnahme 2 rechteckförmig mit nach außen gewölbten Seiten der Seitenrand 3 ausgebildet. Auch bei diesem Padhalter 1 wird die Padaufnahme durch die Seitenwand 3 begrenzt, an die sich die Auflagestufe 4 zur Auflage des Siegelrandes des Kaffeepads und anschließend die Aufnahmemulde 5 anschließt. Diese Aufnahmemulde 5 wird wieder durch einen Phasenabschnitt 6, eine Innenwand 7, eine Ringnut 8, den Auflagebereich 9 und die Auslauföffnung 10 gebildet. Die Ablaufnuten 11 erstrecken sich von den Ecken der Padaufnahme 2 bis in den Bereich der Auslauföffnung 10. Im Bereich des Auflagebereichs 9 sind wiederum radiale und umlaufende Drainagenuten 12 vorgesehen. In der Schnittansicht dieses Padhalters 1 mit rechteckförmiger Padaufnahme 2 in Fig. 4a ist zu erkennen, dass der Padhalter 1 als Wendewechselkassette ausgebildet ist und sowohl von der Oberseite als auch von der Unterseite eine entsprechende Padaufnahme 2 aufweist. In dieser Schnittansicht, die einen durch die Auslauföffnung 10 gehenden die Seiten der Padaufnahme 2 im Wesentlichen senkrecht schneidenden Schnitt zeigt, ist zu erkennen, dass die Breite der Ringnut 8 in dieser Schnittebene vergleichsweise klein ist, die abgerundeten Seitenbereiche 17 und die Grundfläche 18 aber weiterhin die Ausbildung eines sicheren Ringhohlraums ermöglichen. Die Ablaufnuten 11 erstrecken sich nicht in der Schnittebene des in Fig. 4a dargestellten Schnitts sondem jeweils aus den Eckenbereichen der Padaufnahme 2 bis zur Auslauföffnung 10, wie in der Draufsicht in Fig. 4b erkennbar. Auch bei dieser Padaufnahme 2 sind wieder vier Ablaufnuten 11 vorgesehen, die in einem Winkel von 90° zueinander angeordnet sind. Entgegen der rechteckförmigen Padaufnahme bzw. der rechteckförmigen Aufnahmemulde 5 ist der mittig angeordnete Auflagebereich 9 kreisförmig ausgebildet, so dass die Ringnut 8 einen inneren ringförmigen Seitenbereich 17 und einen äußeren rechteckigen Seitenbereich 17 besitzt, wodurch sich die Breite der Ringnut 8 beim Umlauf um den Auflagebereich 9 ständig ändert und den größten Abstand im Eckenbereich, bzw. im Schnitt durch die Ablaufnuten 11 aufweist.

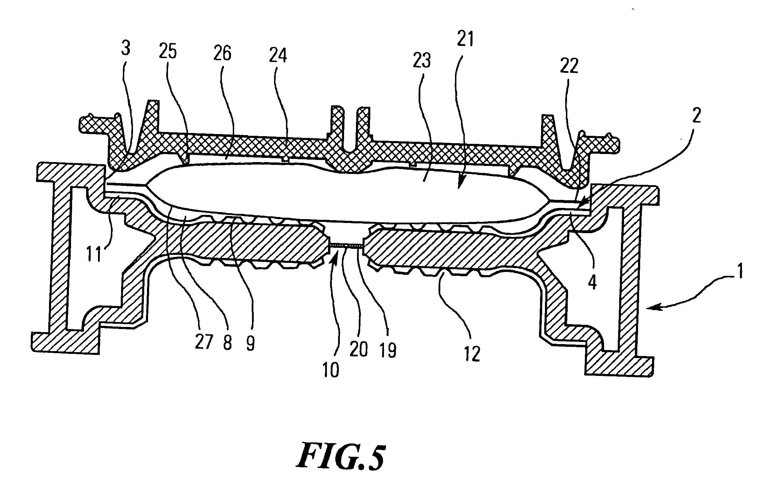

Fig. 5 zeigt einen Schnitt durch einen Padhalter 1 mit einer im Wesentlichen runden Padaufnahme 2, in der ein Kaffeepad 21 eingelegt ist, auf dem von oben die Druckplatte 24 des oberen Brühkammerteils aufliegt. Dabei ist der Siegelrand 22 des Kaffeepads 21 im Bereich der Auflagestufe 4 angeordnet, während sich der mit Kaffee gefüllte Kissenabschnitt 23 in der Padaufnahme 2 des Padhalters 1 befindet. In Fig. 5 ist deutlich zu erkennen, dass die Druckplatte 24 bereits auf das Kaffeepad 21 drückt und ein auf der dem Kaffeepad zugewandten Unterseite der Druckplatte 24 vorgesehene umlaufende Vorsprung 25 bereits in die Padaufnahme 2 eingetaucht ist. Dabei liegt die Unterseite des Kaffeepads 21 nur im Auflagebereich 9 in der Padaufnahme 2 auf, während im Bereich der Ringnut 8 deutlich ein Hohlraum 27 vorhanden ist. Im geschlossenen Zustand der Brühkammer sind der Vorsprung 25 und die Druckplatte 24 noch weiter in die Padaufnahme 2 eingefahren, wodurch die Unterseite des Kaffeepads 21 über den gesamten Auflagebereich 9 aufliegt, während sich insbesondere durch das Andrücken der Druckplatte 24 je nach Füllgrad und Einlegegenauigkeit das Kaffeepad 21 zumindest teilweise in den Ringhohlraum 27 der Ringnut 8 einformt. Im Brühzustand drückt sich der Vorsprung 25 als Folge des Quellverhaltens des Kaffeepulvers weiter in die Oberseite des Kaffeepads 21 ein. Der umlaufende Vorsprung 25 grenzt im Bereich auf der Unterseite der Druckplatte 24 einen Zulaufbereich 26 ab, in dem während des Brühvorgangs das Brühwasser über der Oberfläche des Pads 21 verteilt wird und in das Kaffeepad 21 selbst eindringen kann.

Im Folgenden wird Wirkungs- und Funktionsweise des oben beschriebenen Padhalters in einer erfindungsgemäßen Brühvorrichtung näher erläutert.

In der in Fig. 5 dargestellten Stellung des Padhalters 1 mit einem einzelnen Kaffeepad 21 ist das Kaffeepad 21 so in der Padnahme 2 aufgenommen, dass der Siegelrand 22 auf der Auflagestufe 4 aufliegt und das Pad 21 nach dem Einfahren des oberen Brühkammerteils bzw. deren Druckplatte 24 in die Padaufnahme 2, die Brühkammer geschlossen wird. Dabei drückt der umlaufende Vorsprung 25 der Druckplatte in einer Weise auf das Kaffeepad, das sich zwischen Druckplatte und Oberseite des Kaffeepads 21 ein Zulaufbereich 26 für das Brühwasser bildet, in dem aus einem Brühwassereinlauf (nicht gezeigt) kommend das Brühwasser sich über das Kaffeepad verteilt. Der umlaufende Vorsprung 25 sorgt weiter dafür, dass die Unterseite des Kaffeepads 21 auf dem Auflagebereich 9 aufliegt und bei einem normal eingelegten und gefüllten Kaffeepad zwischen der Ringnut 8 und der Unterseite des Kaffeepads ein Ringhohlraum 27 bestehen bleibt. Das von einer Pumpe zugeführte Brühwasser strömt aus dem Zulaufbereich 26 durch die Oberseite des Kaffeepads 21 in das Kaffeepulver hinein und tritt auf der Unterseite des Kaffeepads wieder aus, wo es über die Ablaufnuten 11 aus dem gesamten Bereich der Padaufnahme zur Auslauföffnung 10 geführt wird. Dabei wird insbesondere auch der Randbereich des Kaffeepads in den Extraktionsvorgang eingebunden. Zwar kann es bei dem Brühvorgang zu einem Aufquellen des Kaffeepulvers im Kaffeepad 21 kommen, wodurch sich zumindest bereichsweise das Kaffeepad in den Ringhohlraum 27 ausdehnt, jedoch können dabei weder die Ringnut 8 ausgefüllt noch die Ablaufnuten 11 mit kleinem Breiten-Tiefen-Verhältnis abgedichtet oder verschlossen werden. Vielmehr wird Brühwasser, das an dem umlaufenden Vorsprung 25 der oberen Druckplatte 24 vorbeiströmt oder das durch den Randbereich des Kaffeepads 21 in die Ringnut 8 strömt, im Bereich der Ringnut 8 durch die Formgebung der bogenförmigen Seitenbereiche 17 wieder in das Kaffeepad 21 zurückgeführt, wodurch sich das Extraktionsergebnis auch des teilweise am Kaffeepad vorbeiströmenden Brühwassers verbessert.

## Patentansprüche

1. Brühvorrichtung für eine Niederdruckkaffeemaschine, mit einer Brühkammer, einem unteren Brühkammerteil und einem oberen, relativ zum unteren, von einer geschlossenen Brühstellung in eine offene Entnahmestellung bewegbaren Brühkammerteil, wobei das untere Brühkammerteil eine von einer Seitenwand (3) begrenzte Aufnahme (2) für ein mit gemahlenem Kaffee gefülltes Filterkissen (Kaffeepad (21)) aufweist, wobei die Aufnahme (2) eine Aufnahmemulde (5) zur Aufnahme eines mit dem gemahlenen Kaffee gefüllten Bereichs (23) des Kaffeepads (21) und eine die Aufnahmemulde (5) ringförmig umgebende sich bis zur Seitenwand (3) erstreckende Auflagestufe (4) für die im wesentlichen flache Auflage eines Siegelrandes (22) des Kaffeepads umfasst, wobei in der Aufnahmemulde (5) zum Abführen des aufgebrühten Kaffeeextrakts eine Auslauföffnung (10) vorgesehen ist,
**dadurch gekennzeichnet, dass** die Aufnahmemulde (5) einen die Auslauföffnung (10) umgebenden erhöhten Auflagebereich (9) und eine gegenüber dem erhöhten Auflagebereich (9) vertieft angeordnete, den erhöhten Auflagebereich (9) umgebende Ringnut (8) umfasst.

2. Brühvorrichtung nach Anspruch 1,
**dadurch gekennzeichnet, dass** die Ringnut (8) abgerundete Seitenbereiche (17) und eine im Wesentlichen ebene Grundfläche (18) aufweist, wobei die Seitenbereiche (17) von der Grundfläche (18) zum erhöhten Auflagebereich (9) und in Richtung der Auflagestufe (4) ansteigen.

3. Brühvorrichtung nach Anspruch 1 oder 2,
**dadurch gekennzeichnet, dass** die Projektionsfläche der Ringnut (8) 35% bis 45% der Projektionsfläche der Aufnahmemulde (5) entspricht.

4. Brühvorrichtung nach einem der Ansprüche 1 bis 3,
**dadurch gekennzeichnet, dass** die Projektionsfläche der Ringnut (8) 20% bis 35% der Projektionsfläche des Auflagebereichs (9) entspricht.

5. Brühvorrichtung nach einem der Ansprüche 2 bis 4,
**dadurch gekennzeichnet, dass** der Auflagebereich (9) der Aufnahmemulde (5) gegenüber der Grundfläche (18) der Ringnut (8) um 1 bis 2 mm, bevorzugt um ca. 1,5 mm, erhöht ist.

6. Brühvorrichtung nach einem der Ansprüche 2 bis 5,
**dadurch gekennzeichnet, dass** die Höhe eines zwischen der Ringnut (8) und einem in der Entnahmestellung auf dem Auflagebereich (9) aufliegenden Kaffeepad (21) ausgebildeten Ringhohlraums (27) zwischen 20 % und 40% der Höhe des auf dem Auflagebereich (9) aufliegenden Kaffeepads (21) entspricht.

7. Brühvorrichtung nach einem der Ansprüche 1 bis 6,
**dadurch gekennzeichnet, dass** Ablaufnuten (11) vorgesehen sind, die sich durchgehend von der Seitenwand (3) bis in den Bereich der Auslauföffnung (10) erstrecken, wobei die Ablaufnuten (11) die Ringnut (8) durchdringen.

8. Brühvorrichtung nach Anspruch 7,
**dadurch gekennzeichnet, dass** bevorzugt vier Ablaufnuten (11) vorgesehen sind und die Ablaufnuten (11) eine Breite von ca. 1 mm aufweisen.

9. Brühvorrichtung nach Anspruch 7 oder 8,
**dadurch gekennzeichnet, dass** die Ablaufnuten (11) zumindest im Bereich der Auflagestufe (4) und im Auflagebereich (9) eine gleiche Tiefe, bevorzugt ca. 1 mm, aufweisen.

10. Brühvorrichtung nach einem der Ansprüche 1 bis 9,
**dadurch gekennzeichnet, dass** der Auflagebereich (9) eine Vielzahl von Drainagenuten (12) zum Ausleiten des aufgebrühten Kaffeeextrakts aus dem Kaffeepad (21) aufweist.

11. Brühvorrichtung nach Anspruch 10,
**dadurch gekennzeichnet, dass** die Drainagenuten (12) umlaufend um die Auslauföffnung (10) und/oder radial in Richtung auf die Auslauföffnung (10) angeordnet sind.

12. Brühvorrichtung nach einem der Ansprüche 1 bis 11,
**dadurch gekennzeichnet, dass** der Durchmesser der Auslauföffnung (10) zwischen 5 % und 15 %, bevorzugt zwischen 7 % und 13 % des Durchmessers der Aufnahmemulde (5) entspricht.

13. Brühvorrichtung nach einem der Ansprüche 1 bis 12,
**dadurch gekennzeichnet, dass** die Auslauföffnung (10) eine Düsenscheibe (19) mit einer Düsenöffnung (20) aufweist.

14. Brühvorrichtung nach Anspruch 13,
**dadurch gekennzeichnet, dass** das Verhältnis zwischen dem Durchmesser der Düsenöffnung (20) und dem Durchmesser der Auslauföffnung (10) zwischen 0,1 und 0,2 beträgt.

15. Brühvorrichtung nach Anspruch 13 oder 14,
**dadurch gekennzeichnet, dass** der Durchmesser der Düsenöffnung (20) zwischen 0,6 und 1,0 mm, bevorzugt ca. 0,8 mm, beträgt.

16. Brühvorrichtung nach einem der Ansprüche 1 bis 15,
**dadurch gekennzeichnet, dass** das untere Brühkammerteil als herausziehbare und hineinschiebbare Kassette ausgebildet ist.

17. Brühvorrichtung nach Anspruch 16,
**dadurch gekennzeichnet, dass** die herausziehbare und hineinschiebbare Kassette als Wendewechselkassette ausgebildet ist und auf der der Aufnahmemulde (5) abgewandten Seite der Auslauföffnung (10) eine weitere, im Wesentlichen gleichartig ausgebildete Aufnahme (2) für ein oder mehrere Kaffeepads (21) und /oder Filterbehälter ausgebildet ist, wobei sich die Auslauföffnung (10) durch beide Aufnahmen (2) erstreckt.

18. Brühvorrichtung für eine Niederdruckkaffeemaschine, mit einer Brühkammer, einem unteren Brühkammerteil und einem oberen, relativ zum unteren, von einer geschlossenen Brühstellung in eine offene Entnahmestellung bewegbaren Brühkammerteil, wobei das untere Brühkammerteil eine von einer Seitenwand (3) begrenzte Aufnahme (2) und ein darin angeordnetes, mit gemahlenem Kaffee gefülltes Filterkissen (Kaffeepad (21)) aufweist, wobei die Aufnahme (2) eine Aufnahmemulde (5), in der der mit gemahlenem Kaffee gefüllte Bereich (23) des Kaffeepads (21) aufgenommen ist, und eine die Aufnahmemulde (5) ringförmig umgebende sich bis zur Seitenwand (3) erstreckende Auflagestufe (4) auf der der Siegelrand (22) des Kaffeepads (21) im Wesentlichen flach aufliegt umfasst, wobei in der Aufnahmemulde (5) zum Abführen des aufgebrühten Kaffeeextrakts eine Auslauföffnung (10) vorgesehen ist,
**dadurch gekennzeichnet, dass** die Aufnahmemulde (5) einen die Auslauföffnung (10) umgebenden erhöhten Auflagebereich (9) und eine gegenüber dem erhöhten Auflagebereich (9) vertieft angeordnete, den erhöhten Auflagebereich (9) umgebende Ringnut (8) umfasst.

19. Halter für eine Brühvorrichtung nach einem der Ansprüche 1 bis 18,
**dadurch gekennzeichnet, dass** die Aufnahmemulde (5) einen die Auslauföffnung (10) umgebenden erhöhten Auflagebereich (9) und eine gegenüber dem erhöhten Auflagebereich (9) vertieft angeordnete, den erhöhten Auflagebereich (9) umgebende Ringnut (8) umfasst.
